(19) **Europäisches Patentamt**
**European Patent Office**
**Office européen des brevets**

(11) **EP 1 726 426 B1**

(12) **EUROPEAN PATENT SPECIFICATION**

(45) Date of publication and mention
of the grant of the patent:
**13.02.2013 Bulletin 2013/07**

(21) Application number: **05721120.3**

(22) Date of filing: **18.03.2005**

(51) Int Cl.:
**B29C 45/66** *(2006.01)*     **B29C 33/22** *(2006.01)*

(86) International application number:
**PCT/JP2005/004933**

(87) International publication number:
**WO 2005/090052 (29.09.2005 Gazette 2005/39)**

(54) **MOLD CLAMPING DEVICE AND MOLD THICKNESS ADJUSTING METHOD**

FORMWERKZEUGVERRIEGELUNGSVORRICHTUNG UND
FORMWERKZEUGDICKENEINSTELLUNGSVERFAHREN

DISPOSITIF DE SERRAGE DE MOULE ET PROCÉDÉ DE RÉGLAGE D'ÉPAISSEUR DE MOULE

(84) Designated Contracting States:
**AT CH DE IT LI**

(30) Priority: **19.03.2004 JP 2004080004**

(43) Date of publication of application:
**29.11.2006 Bulletin 2006/48**

(73) Proprietor: **SUMITOMO HEAVY INDUSTRIES, LTD.**
**Shinagawa-ku,**
**Tokyo 141-8686 (JP)**

(72) Inventors:
• **TOKUI, Yosuke**
**Inage-ku,**
**Chiba-shi,**
**Chiba 2630001 (JP)**

• **MORITANI, Kouji**
**Yokosuka-shi,**
**Kanagawa 2370061 (JP)**

(74) Representative: **Wagner, Karl H.**
**Wagner & Geyer Partnerschaft**
**Patent- und Rechtsanwälte**
**Gewürzmühlstrasse 5**
**80538 München (DE)**

(56) References cited:
DE-A1- 3 715 161     DE-A1- 10 145 740
DE-U1- 29 513 862     JP-A- 10 151 649
JP-A- 11 028 746     JP-A- 11 147 242

## Description

TECHNICAL FIELD

The present invention relates to a mold-clamping apparatus and a method of adjusting mold thickness.

BACKGROUND ART

Conventionally, a molding machine; for example, an injection molding machine, includes an injection apparatus, a mold apparatus, and a mold-clamping apparatus and produces a molded product by means of injecting resin into a cavity of the mold apparatus through an injection nozzle of the injection apparatus and setting the resin in the cavity. The mold apparatus includes a stationary mold and a movable mold and can perform mold closing, mold clamping, and mold opening by means of operating the mold-clamping apparatus so as to advance the movable mold toward and retreat the movable mold from the stationary mold.

The mold-clamping apparatus includes a stationary platen to which the stationary mold is attached; a movable platen to which the movable mold is attached; an electric motor; a ball screw which includes a ball screw shaft connected to an output shaft of the motor and a ball nut screw-engaged with the ball screw shaft; a crosshead connected to the ball nut; and a toggle mechanism disposed between the crosshead and the movable platen. The crosshead is advanced by driving the motor so as to extend the toggle mechanism, thereby performing mold closing and mold clamping.

However, since the thus-configured mold-clamping apparatus uses the toggle mechanism for generating a mold-clamping force, a bending moment is exerted on the movable platen, causing generation of strain on the mold-mounting surface of the movable platen.

Since mold clamping is performed by extending the toggle mechanism, controlling a mold-clamping force is difficult.

In order to cope with the above problem, there is proposed a mold-clamping apparatus which includes an electric motor and an electromagnet and which utilizes the torque of the motor for performing mold closing and mold opening, as well as the attracting force of the electromagnet for performing mold clamping (refer to, for example, JP-A-03-190 600).

In the proposed mold-clamping apparatus, a rear platen is disposed with a predetermined distance to a stationary platen therefrom, and a movable platen is disposed in a manner capable of advancing and retreating along tie bars extending between the stationary platen and the rear platen. The electromagnet is fixed on the rear end surface of the rear platen; an attraction plate is disposed rearward of the rear platen in a manner capable of advancing and retreating; a link mechanism is disposed between the attraction plate and the movable platen in such a manner as to extend through the rear platen and through the electromagnet; and the link mechanism can be bent and extended by means of the motor.

Accordingly, after mold closing is performed by extending the link mechanism through driving of the motor, the electromagnet is driven so as to attract the attraction plate thereto, whereby mold clamping can be performed. In this case, since the electromagnet is used to generate a mold-clamping force, no bending moment is exerted on the movable platen, and thus no strain arises on the mold-mounting surface. Also, a mold-clamping force can be readily controlled.

However, in the above-mentioned conventional mold-clamping apparatus, when mold thickness is to be adjusted, not only the movable platen and the attraction plate but also the rear platen must be moved. Thus, the number of parts to be moved is increased, resulting in a drop in accuracy in adjusting mold thickness.

An object of the present invention is to solve the above-mentioned problem in the conventional mold-clamping apparatus and to provide a mold-clamping apparatus in which the number of parts to be moved in adjusting mold thickness is reduced to thereby exhibit enhanced accuracy in adjusting mold thickness, as well as a method of adjusting mold thickness.

DE 37 15 161 A1 was used as a basis for the preamble of the independent claims and discloses a clamping unit for devices for injection moulding, which is operated by a linear motor. To increase the mould clamping pressure, an electromagnet is additionally provided.

JP-A-10-151649 discloses a mold clamping device. In order to control a mold clamping force during molding and make it possible to stably generate a large mold clamping force by a method wherein either one of an electromagnet and a suction plate is fixed and the other one is arranged movably and a pressurizing piston and a motor capable of driving clockwise and counterclockwise and the like are equipped, by rotating a ball screw clockwise through the clockwise rotation of a servo motor, a pressurizing piston, a suction plate and a movable platen advance, resulting in a fixed mold and a movable mold coming into contact with each other so as to clamp the molds. Next, by feeding a current to a coil, the suction plate is attracted by means of the attraction of the electromagnet. At this time, the attraction of the electromagnet is transmitted in order from an electromagnetic laminate steel plate to the movable platen as a mold clamping force so as to push the movable mold against the fixed mold Then, by changing the value of the current to be fed to the coil, the mold clamping force during molding is changed. Further, when the ball screw is rotated anticlockwise by driving the servo motor counterclockwise, the fixed mold and the movable mold separate from each other so as to open the molds.

DE 101 45 740 A1 discloses that immediately after tool closure, clamping load is increased by a servomotor acting on a toggle lever arrangement. The toggle lever and thus the tool reach their final calculated position based on a set clamping force by a specific rotation of the servomotor.

## DISCLOSURE OF THE INVENTION

According to the present invention, a mold-clampingapparatus is provided as set forth in claim 1. Preferred embodiments of the present invention may be gathered from the dependent claims. Moreover, a method of adjusting mold thickness for a mold-clamping apparatus is provided as set forth in claim 11.

## EFFECT OF THE INVENTION

According to the present invention, the mold-clamping apparatus comprises a first stationary member to which a stationary mold is attached; a first movable member disposed in opposition to the first stationary member and to which a movable mold is attached; and a second movable member to be advanced and retreated in association with advancement and retreat of the first movable member.

Mold thickness is adjusted by means of changing relative positions of the first movable member and the second movable member.

In this case, since mold thickness is adjusted by means of changing relative positions of the first movable member and the second movable member, the number of parts to be moved in adjusting mold thickness can be reduced, whereby accuracy in adjusting mold thickness can be enhanced.

## BRIEF DESCRIPTION OF DRAWINGS

FIG. 1 is a view showing a first embodiment of the present invention in which a mold apparatus and a mold-clamping apparatus are in a mold-closed condition.

FIG. 2 is a view showing the first embodiment of the present invention in which the mold apparatus and the mold-clamping apparatus are in a mold-opened condition.

FIG. 3 is a view showing a second embodiment of the present invention in which a mold apparatus and a mold-clamping apparatus are in a mold-closed condition.

FIG. 4 is a view showing a third embodiment of the present invention in which a mold apparatus and a mold-clamping apparatus are in a mold-closed condition.

FIG. 5 is a view showing a fourth embodiment of the present invention in which a mold apparatus and a mold-clamping apparatus are in a mold-closed condition.

FIG. 6 is a view showing a fifth embodiment of the present invention in which a mold apparatus and a mold-clamping apparatus are in a mold-closed condition.

FIG. 7 is a view showing a sixth embodiment of the present invention in which a mold apparatus and a mold-clamping apparatus are in a mold-closed condition.

FIG. 8 is a sectional view taken along line X-X of FIG. 7.

FIG. 9 is a sectional view taken along line Y-Y of FIG. 7.

FIG. 10 is a sectional view taken along line Z-Z of FIG. 7.

FIG. 11 is a view showing a seventh embodiment of the present invention in which a mold apparatus and a mold-clamping apparatus are in a mold-closed condition.

FIG. 12 is a sectional view taken along line A-A of FIG. 11.

FIG. 13 is a sectional view taken along line B-B of FIG. 11.

FIG. 14 is a sectional view taken along line C-C of FIG. 11.

FIG. 15 is a view showing an eighth embodiment of the present invention in which a mold apparatus and a mold-clamping apparatus are in a mold-closed condition.

## DESCRIPTION OF REFERENCE NUMERALS

10: mold-clamping apparatus
11: stationary platen
12: movable platen
13: rear platen
22: attraction plate
28, 128: linear motor
39, 139, 239: rod
56, 256: mold-thickness-adjusting motor

## BEST MODE FOR CARRYING OUT THE INVENTION

Embodiments of the present invention will next be described in detail with reference to the drawings. In description of the embodiments, the terms front and rear are used as follows: in the case of a mold-clamping apparatus, front refers to a direction in which a movable platen moves at the time of mold closing, and rear refers to a direction in which the movable platen moves at the time of mold opening; and in the case of an injection apparatus, front refers to a direction in which a screw moves at the time of injection, and rear refers to a direction in which the screw moves at the time of metering.

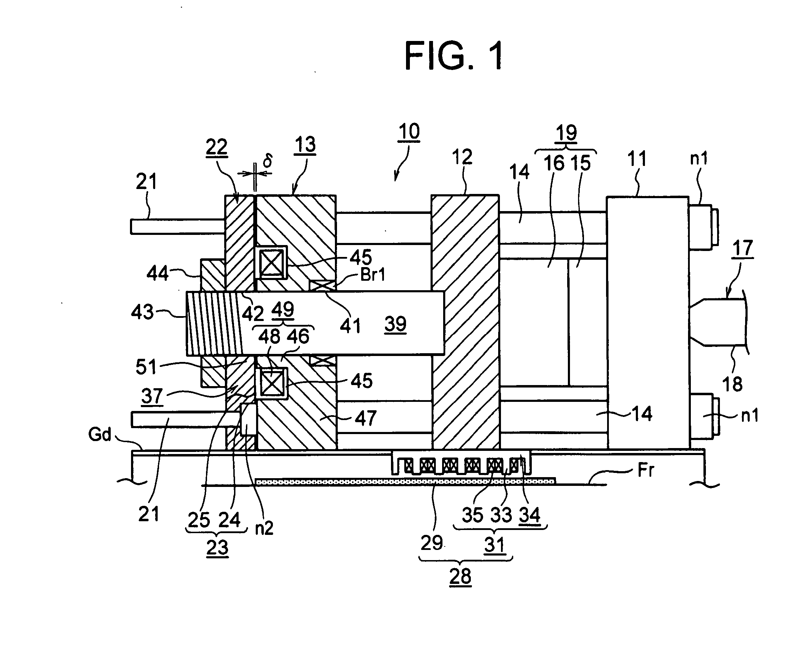

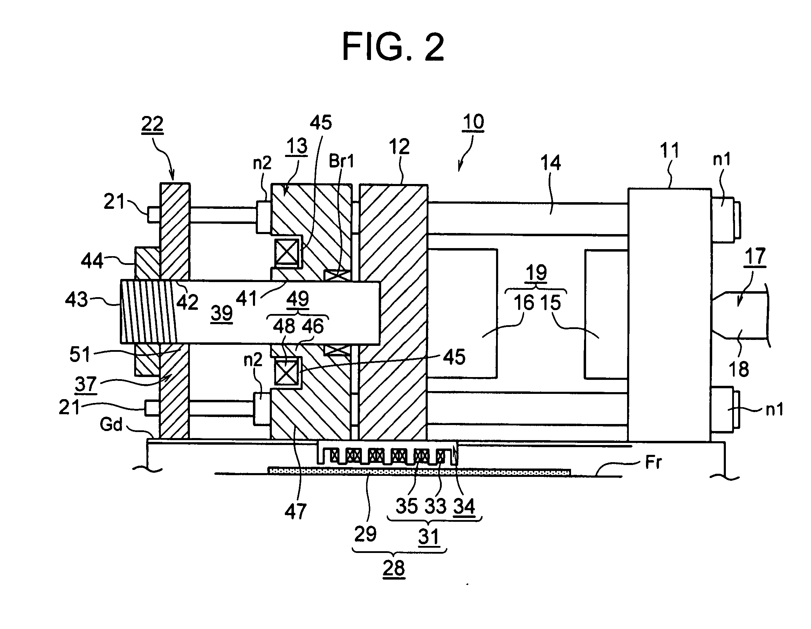

FIG. 1 is a view showing a first embodiment of the present invention in which the mold apparatus and the mold-clamping apparatus are in a mold-closed condition. FIG. 2 is a view showing the first embodiment of the present invention in which the mold apparatus and the mold-clamping apparatus are in a mold-opened condition.

In the drawings, reference numeral 10 denotes a mold-clamping apparatus; Fr denotes a frame of an injection molding machine; Gd denotes two guides (the drawings show only one of the two guides Gd) which are laid on the frame Fr and form rails, support and guide the mold-clamping apparatus 10, and serve as first guide members; and reference numeral 11 denotes a stationary platen which is disposed on the guides Gd, is fixed to the frame Fr and to the guides Gd, and serves as a first stationary member. A rear platen 13 which serves as a second stationary member is disposed in opposition to the stationary platen 11 with a predetermined distance therebetween. Four tie bars 14 (the drawings show only two of the four tie bars 14) which serve as connection members extend between the stationary platen 11 and the rear platen 13. The rear platen 13 is disposed on the guides Gd in such a manner as to be slightly movable in relation to the guides Gd in association with extension and contraction of the tie bars 14.

In the present embodiment, the stationary platen 11 is fixed to the frame Fr and to the guides Gd, whereas the rear platen 13 is slightly movable in relation to the guides Gd. However, the following alternative is possible: the rear platen 13 is fixed to the frame Fr and to the guides Gd, whereas the stationary platen 11 is slightly movable in relation to the guides Gd.

A movable platen 12 which serves as a first movable member is disposed in opposition to the stationary platen 11 in a manner capable of advancing and retreating along the tie bars 14 in a mold-opening-closing direction. For this advancement and retreat, unillustrated guide holes corresponding to the tie bars 14 are formed in the movable platen 12 so as to allow the tie bars 14 to extend therethrough.

An unillustrated first threaded portion is formed at a front end portion of each of the tie bars 14. By means of engaging nuts n1 with the corresponding first threaded portions, the tie bars 14 are fixed to the stationary platen 11. A guide post 21 whose diameter is smaller than that of the tie bar 14 and which serves as a second guide member is formed integral with a predetermined rear portion of each of the tie bars 14. The guide posts 21 project rearward from the rear end surface of the rear platen 13. An unillustrated second threaded portion is formed at a portion of each of the guide posts 21 in the vicinity of the rear end surface of the rear platen 13. By means of engaging nuts n2 with the corresponding second threaded portions, the stationary platen 11 and the rear platen 13 are connected. In the present embodiment, the guide posts 21 are formed integral with the corresponding the tie bars 14. However, the guide posts 21 may be formed separately from the tie bars 14.

A stationary mold 15 which serves as a first mold is fixed to the stationary platen 11. A movable mold 16 which serves as a second mold is fixed to the movable platen 12. As the movable platen 12 advances or retreats, the movable mold 16 comes into contact with or moves away from the stationary mold 15, thereby performing mold closing, mold clamping, and mold opening. When mold clamping is performed, a plurality of unillustrated cavities are formed between the stationary mold 15 and the movable mold 16, and an unillustrated resin which serves as a molding material is injected into the cavities from an injection nozzle 18 of an injection apparatus 17 and fills the cavities. The stationary mold 15 and the movable mold 16 constitute a mold apparatus 19.

An attraction plate 22 which serves as a second movable member is disposed in parallel with the movable platen 12 and rearward of the rear platen 13, in a manner capable of advancing and retreating along the guide posts 21 while being guided by the guide posts 21. Guide holes 23 corresponding to the guide posts 21 are formed in the attraction plate 22 so as to allow the guide posts 21 to extend therethrough. Each of the guide holes 23 consists of a large-diameter portion 24 which opens at the front end surface of the attraction plate 22 and accommodates the corresponding nut n2, and a small-diameter portion 25 which opens at the rear end surface of the attraction plate 22 and has a slide surface for allowing the corresponding guide post 21 to slide thereon. In the present embodiment, the attraction plate 22 is guided by the guide posts 21. However, the attraction plate 22 can be guided not only by the guide posts 21 but also by the guides Gd.

In order to advance and retreat the movable platen 12, a linear motor 28 which serves as a first drive section and as a drive section for opening and closing a mold is disposed between the movable platen 12 and the frame Fr. The linear motor 28 includes a stator 29 which serves as a first drive element, and a movable element 31 which serves as a second drive element. The stator 29 is formed on the frame Fr in parallel with the guides Gd and in such a manner as to correspond to the moving range of the movable platen 12. The movable element 31 is formed at the lower end of the movable platen 12 in such a manner as to face the stator 29 and to extend over a predetermined range.

When Lp, Lm, and Lst represent the length of the stator 29, the length of the movable element 31, and the stroke of the movable platen 12, respectively, the length Lm is set in accordance with the maximum thrust force of the linear motor 28, and the length Lp is set so as to satisfy:

$$Lp > Lm + Lst$$

The movable element 31 includes a core 34 and a coil 35. The core 34 includes a plurality of magnetic-pole teeth 33 formed in such a manner as to project toward the stator 29 and to be arranged at predetermined pitch spacings. The coil 35 is wound around the magnetic-pole teeth 33. The magnetic-pole teeth 33 are formed in parallel with one another and perpendicularly to a moving direction of the movable platen 12. The stator 29 includes an unillustrated core and an unillustrated permanent magnet extending on the core. The permanent magnet is magnetized such that N poles and S poles are arranged alternately at the same pitch spacings as those of the magnetic-pole teeth 33.

Accordingly, when the linear motor 28 is driven by means of applying a predetermined current to the coil 35, the movable element 31 is advanced and retreated. Accordingly, the movable platen 12 is advanced and retreated, whereby mold closing and mold opening can be performed.

In the present embodiment, the permanent magnet is disposed on the stator 29, and the coil 35 is disposed on the movable element 31. However, the following alternative is possible: the coil is disposed on the stator, and the permanent magnet is disposed on the movable element. In this case, since the coil does not move during the course of driving the linear motor 28, wiring for supplying power to the coil can be facilitated.

When the movable platen 12 is advanced, the movable mold 16 abuts the stationary mold 15, thereby performing mold closing. Subsequently, mold clamping is performed. In order to perform mold clamping, an electromagnet unit 37 which serves as a second drive section and as a drive section for clamping a mold is disposed between the rear platen 13 and the attraction plate 22. A rod 39 which serves as a mold-clamping-force transmission member extends through the rear platen 13 and through the attraction plate 22; connects the movable platen 12 and the attraction plate 22; and is disposed in a manner capable of advancing and retreating. During mold closing and mold opening, the rod 39 advances or retreats the attraction plate 22 in an interlocking relation with advancement and retreat of the movable platen 12. During mold clamping, the rod 39 transmits to the movable platen 12 a mold-clamping force generated by the electromagnet unit 37.

The stationary platen 11, the movable platen 12, the rear platen 13, the attraction plate 22, the linear motor 28, the electromagnet unit 37, the rod 39, and the like constitute the mold-clamping apparatus 10.

The electromagnet unit 37 includes an electromagnet 49 which is formed on the side of the rear platen 13 and serves as a first drive member, and an attraction portion 51 which is formed on the side of the attraction plate 22 and serves as a second drive member. The attraction portion 51 is formed in a predetermined region of the front end surface of the attraction plate 22; in the present embodiment, in a region of the attraction plate 22 which surrounds the rod 39 and faces the electromagnet 49. Two horizontally extending parallel grooves 45 are formed in respectively predetermined regions of the rear end surface of the rear platen 13, which are located slightly above and below the rod 39 in the present embodiment. Thus, a core 46 having a rectangular shape is formed at a portion of the rear platen 13 between the grooves 45, and a yoke 47 is formed at the remaining portion of the rear platen 13. A coil 48 is wound on the core 46.

The core 46, the yoke 47, and the attraction plate 22 are formed by laminating ferromagnetic sheets and thus each assume the form of an electromagnetic steel laminate.

In the present embodiment, the electromagnet 49 is formed separately from the rear platen 13, and the attraction portion 51 is formed separately from the attraction plate 22. However, the following alternative is possible: the electromagnet is formed as a portion of the rear platen 13, and the attraction portion is formed as a portion of the attraction plate 22.

Accordingly, in the electromagnet unit 37, when current is applied to the coil 48, the electromagnet 49 is driven and attracts the attraction portion 51, thereby generating the aforementioned mold-clamping force.

The rod 39 is connected, at a rear end portion, to the attraction plate 22 and is connected, at a front end portion, to the movable platen 12. Accordingly, at the time of mold closing, advancement of the movable platen 12 advances the rod 39, thereby advancing the attraction plate 22. At the time of mold opening, retreat of the movable platen 12 retreats the rod 39, thereby retreating the attraction plate 22.

In order to implement the above operation, a hole 41 is formed in a central portion of the rear platen 13 for allowing the rod 39 to extend therethrough; a hole 42 is formed in a central portion of the attraction plate 22 for allowing the rod 39 to extend therethrough; and a bearing member Br1, such as a bush, for slidably supporting the rod 39 is disposed at a front end portion of the hole 41. A thread 43 is formed at a rear end portion of the rod 39. A nut 44 which is rotatably supported by the attraction plate 22 is engaged with the thread 43.

At the time of completion of mold closing, the attraction plate 22 is located in the vicinity of the rear platen 13, and a gap $\delta$ is formed between the rear platen 13 and the attraction plate 22. When the gap $\delta$ is too small or too large, the attraction portion 51 fails to be sufficiently attracted; as a result, mold-clamping force becomes weak. The optimum gap $\delta$ varies with the thickness of the mold apparatus 19.

An unillustrated large-diameter gear is formed on the outer circumferential surface of the nut 44; an unillustrated mold-thickness-adjusting motor which serves as a drive section for adjusting mold thickness is disposed on the attraction plate 22; and a small-diameter gear attached to an output shaft of the mold-thickness-adjusting motor is engaged with the gear formed on the outer circumferential surface of the nut 44.

When the mold-thickness-adjusting motor is driven so as to rotate the nut 44 by a predetermined amount in relation to the thread 43 and in accordance with the thickness of the mold apparatus 19, the position of the rod 39 in relation to the attraction plate 22 is adjusted. Thus, the position of the attraction plate 22 in relation to the stationary platen 11 and the movable platen 12 is adjusted accordingly, whereby the gap $\delta$ can be set

to an optimum value. In other words, by means of changing relative positions of the movable platen 12 and the attraction plate 22, mold thickness is adjusted.

The mold-thickness-adjusting motor, the gear, the nut 44, the rod 39, and the like constitute a mold-thickness-adjusting apparatus. The gear serves as a rotation transmission section for transmitting rotation of the mold-thickness-adjusting motor to the nut 44. The nut 44 and the thread 43 constitute a motion direction converter. The motion direction converter converts the rotary motion of the nut 44 to the rectilinear motion of the rod 39. In this case, the nut 44 serves as a first conversion element, and the thread 43 serves as a second conversion element.

Next, the operation of the thus-configured mold-clamping apparatus 10 will be described.

When an old mold apparatus 19 is replaced with a new mold apparatus 19, first, adjustment of mold thickness is performed; i.e., the distance between the attraction plate 22 and the movable platen 12 is changed according to the thickness of the new mold apparatus 19. In this adjustment of mold thickness, the stationary mold 15 and the movable mold 16 are attached to the stationary platen 11 and to the movable platen 12, respectively. Next, the movable mold 16 is retreated, thereby bringing the mold apparatus 19 into an opened condition.

In a subsequent distance adjustment step, the linear motor 28 is driven so as to perform mold touch; i.e., the movable mold 16 is brought into contact with the stationary mold 15. At this time, clamping force is not generated. In this state, the mold-thickness-adjusting motor is driven for rotating the nut 44, so as to adjust the distance between the rear platen 13 and the attraction plate 22; i.e., the gap $\delta$, to a predetermined value.

In this connection, in order to prevent breakage of the coil 48 even when the rear platen 13 and the attraction plate 22 come into contact with each other, the coil 48 is embedded in the rear platen 13 in such a manner as not to project from the surface of the rear platen 13. In this case, the surface of the rear platen 13 functions as a stopper for preventing damage to the coil 48. In the case where the coil 48 projects from the surface of the rear platen 13, an unillustrated contact prevention stopper is disposed between the rear platen 13 and the attraction plate 22; for example, on the surface of the rear platen 13 in opposition to the attraction plate 22 or on the surface of the attraction plate 22 in opposition to the rear platen 13, so as to prevent breakage of the coil 48 which would otherwise result from contact between the rear platen 13 and the attraction plate 22.

Subsequently, a mold-opening-closing processing means of an unillustrated control section performs a mold-opening-closing process. At the time of mold closing, in the state of FIG. 2, the mold-opening-closing processing means causes application of current to the coil 35. Subsequently, the linear motor 28 is driven for advancing the movable platen 12, so as to bring the movable mold 16 into contact with the stationary mold 15 as shown in FIG. 1. At this time, an optimum gap $\delta$ is formed between the rear platen 13 and the attraction plate 22; i.e., between the electromagnet 49 and the attraction portion 51. Notably, force required for mold closing is sufficiently small as compared with mold-clamping force.

Subsequently, at the time of mold clamping, the mold-opening-closing processing means causes application of current to the coil 48, whereby attraction force of the electromagnet 49 attracts the attraction portion 51. By this procedure, mold-clamping force is transmitted to the movable platen 12 via the attraction plate 22 and the rod 39, whereby mold clamping is performed. Notably, an unillustrated gap adjustment stopper for forming the gap $\delta$ can be disposed. The aforementioned contact prevention stopper can be disposed on the frame Fr.

The mold-clamping force is detected by an unillustrated load detector, and the detected mold-clamping force is sent to the aforementioned control section. The control section performs feedback control; specifically, current applied to the coil 48 is adjusted such that the mold-clamping force assumes a set value. During the course of mold clamping, a resin which is melted in the injection apparatus 17 is injected into cavities of the mold apparatus 19 from the injection nozzle 18 and fills the cavities. Notably, a load cell disposed on the rod 39, a sensor for detecting elongation of the tie bars 14, or the like can be used as the load detector.

When the resin in the cavities is cooled and set, at the time of mold opening, in the state shown in FIG. 1, the mold-opening-closing processing means stops application of current to the coil 48. In association with this procedure, mold opening is performed; i.e., the linear motor 28 is driven for retreating the movable platen 12, and the movable mold 16 is brought to a retreat limit position, as shown in FIG. 2.

As described above, according to the present embodiment, adjustment of mold thickness is performed by means of changing relative positions of the movable platen 12 and the attraction plate 22. Thus, the number of parts to be moved in adjusting mold thickness can be reduced, whereby accuracy in adjusting mold thickness can be enhanced.

Attraction force of the electromagnet 49 advances the attraction plate 22, and mold-clamping force is transmitted to the movable mold 16 via the rod 39 and the movable platen 12. Thus, response and stability of the mold-clamping apparatus 10 at the time of mold clamping can be enhanced.

Since no toggle mechanism is used to generate mold-clamping force, no bending moment is exerted on the movable platen 12. Thus, no strain arises on the mold-mounting surface of the movable platen 12.

Since the rod 39 has not only the function of transmitting mold-clamping force but also the function of adjusting mold thickness, the number of parts of the mold-clamping apparatus 10 can be reduced, thereby simplifying the structure of the mold-clamping apparatus 10 and reducing the size of the mold-clamping apparatus 10.

Mold-clamping force can be readily controlled by means of adjusting current to be applied to the coil 48. The movable platen 12 is advanced and retreated by means of applying current to the coil 35, and mold-clamping force is generated by means of applying current to the coil 48. Thus, response and stability of the mold-clamping apparatus 10 can further be enhanced.

A single rod 39 is disposed; i.e., there is no need to dispose the rod 39 for each of the tie bars 14. Thus, the cost of the mold-clamping apparatus 10 can be reduced. Since the number of parts to be moved in adjusting mold thickness can be reduced, a motor having a small capacity can be used as the mold-thickness-adjusting motor. Accordingly, not only can the size of the mold-clamping apparatus 10 be further reduced, but also accuracy in adjusting mold thickness can be enhanced.

Furthermore, since the movable element 31 and the rod 39 are disposed in an axially overlapping condition, the axial dimension of the mold-clamping apparatus 10 can be reduced, thereby reducing the size of the mold-clamping apparatus 10.

Since the rod 39 is disposed at central portions of the movable platen 12, the rear platen 13, and the attraction plate 22, the diameter of the rod 39 can be increased. Accordingly, since the thread 43 can have a sufficiently small lead, the rod 39 is not rotated even when, at the time of transmission of mold-clamping force to the movable platen 12 via the rod 39, reaction force generated on the movable platen 12 is applied to the rod 39. As a result, there is no need to dispose a brake for preventing rotation of the rod 39, whereby the structure of the mold-thickness-adjusting apparatus can be simplified.

After mold closing is performed by driving the linear motor 28, the electromagnet unit 37 is driven for performing mold clamping. Mold clamping causes the movable platen 12 to slightly advance. At this time, the movable element 31 of the linear motor 28 is slightly advanced. However, there is no need to drive the linear motor 28 synchronously with driving of the electromagnet unit 37. What is required is to stop application of current to the coil 35 for bringing the linear motor 28 in an undriven (free) condition. Thus, control of driving of the linear motor 28 can be simplified.

There is no need to dispose a lock mechanism, such as a mechanical lock or a shutter, for moving the movable platen 12 in association with advancement of the attraction plate 22 during the course of mold clamping. Thus, not only can the structure of the mold-clamping apparatus 10 be simplified, but also the linear motor 28 can be driven under no load at the time of mold closing and mold opening. Accordingly, at the time of mold closing and mold opening, the movable platen 12 can be moved smoothly.

Furthermore, in the present embodiment, the linear motor 28 is disposed between the movable platen 12 and the frame Fr; thus, at the time of mold closing, thrust force generated by the linear motor 28 is transmitted directly to the movable platen 12. Accordingly, the positional accuracy of the movable platen 12 can be enhanced.

In the present embodiment, the core 46 and the yoke 47 assume the form of an electromagnetic steel laminate, and the entire attraction plate 22 assumes the form of an electromagnetic steel laminate. However, the attraction portion 51 and a portion of the rear platen 13 around the core 46 may each assume the form of a electromagnetic steel laminate. In the present embodiment, the electromagnet 49 is formed on the rear end surface of the rear platen 13, and the attraction portion 51 is disposed on the front end surface of the attraction plate 22 in such a manner as to face the electromagnet 49 and in a manner capable of advancing and retreating. However, the following alternative is possible: the attraction portion is disposed on the rear end surface of the rear platen 13, and the electromagnet is disposed on the front end surface of the attraction plate 22 in such a manner as to face the attraction portion and in a manner capable of advancing and retreating.

In the present embodiment, a plurality of cavities are formed in the mold apparatus 19 for performing multi-cavity molding, and a plurality of unillustrated ejector devices corresponding to the cavities are disposed on the rear end surface of the movable platen 12 around the rod 39. In the case where a single cavity is formed in the mold apparatus 19 for single-cavity molding, preferably, an ejector device is disposed at a central portion of the rear end surface of the movable platen 12. In this case, the ejector device is disposed within the rod 39.

In the present embodiment, the linear motor 28 is disposed as a first drive section. However, in place of the linear motor 28, an electric motor, a hydraulic cylinder, or the like may be disposed as the first drive section. In the case where the motor is used, a rotary motion associated with rotation generated by driving the motor is converted to a rectilinear motion by means of a ball screw which serves as a motion direction converter, thereby advancing and retreating the movable platen 12.

Next will be described a second embodiment of the present invention which allows single-cavity molding and in which an ejector device is disposed at a central portion of the movable platen 12. Like structural elements of the first and second embodiments are denoted by like reference numerals, and repeated description thereof is omitted. For the effect which the second embodiment yields through employment of structural elements similar to those of the first embodiment, the effect which the first embodiment yields is applied accordingly.

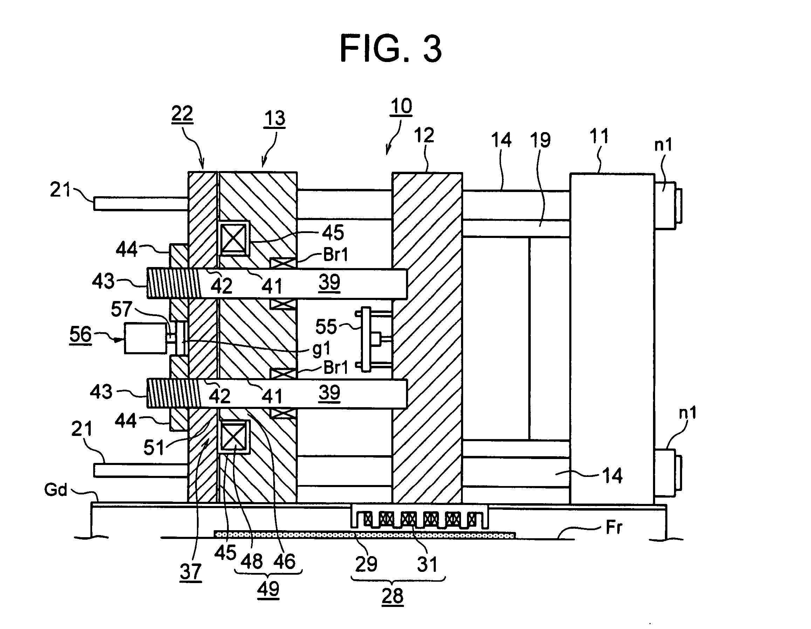

FIG. 3 is a view showing the second embodiment of the present invention in which the mold apparatus and the mold-clamping apparatus are in a mold-closed condition.

In this case, an ejector device 55 is disposed at a central portion of the rear end surface of the movable platen 12, which serves as a first movable member. A plurality of; in the present embodiment, two, rods 39 which serve as mold-clamping-force transmission members are disposed around the ejector device 55; specifically, above and below the ejector device 55. The rods 39 are connected, at their rear end portions, to the attraction plate 22 which serves as a second movable member, via the respective nuts 44. The rods 39 are connected, at their front end portions, to the movable platen 12. At the time of mold closing, advancement of the movable platen 12 advances the rods 39, thereby advancing the attraction plate 22. At the time of mold opening, retreat of the movable platen 12 retreats the rods 39, thereby retreating the attraction plate 22.

The thread 43 is formed at a rear end portion of each of the rods 39. The nuts 44 are engaged with the corresponding thread 43. An unillustrated large-diameter gear is formed on the outer circumferential surface of each of the nuts 44; a mold-thickness-adjusting motor 56 which serves as a drive section for adjusting mold thickness is disposed on the attraction plate 22; and a small-diameter gear g1 attached to an output shaft 57 of the mold-thickness-adjusting motor 56 is engaged with the large-diameter gears.

When the mold-thickness-adjusting motor 56 is driven so as to synchronously rotate the nuts 44 by a predetermined amount in relation to the thread 43 and in accordance with the thickness of the mold apparatus 19, the position of the rods 39 in relation to the attraction plate 22 is adjusted. Thus, the position of the attraction plate 22 in relation to the stationary platen 11 serving as a first stationary member and to the movable platen 12 is adjusted accordingly, whereby the gap $\delta$ (FIG. 1) can be set to an optimum value.

The mold-thickness-adjusting motor 56, the gear g1, the nuts 44, the rods 39, and the like constitute a mold-thickness-adjusting apparatus. The gear g1 and the nuts 44 constitute a rotation transmission section for transmitting rotation of the mold-thickness-adjusting motor 56 to the nuts 44. The nuts 44 and the thread 43 constitute a motion direction converter between the attraction plate 22 and the rods 39. The motion direction converter converts the rotary motion of the nuts 44 to the rectilinear motion of the rods 39. In this case, the nuts 44 serve as first conversion elements, and the thread 43 serves as second conversion elements.

Next will be described a third embodiment of the present invention in which a rod and the movable platen 12 constitute a motion direction converter of the mold-thickness-adjusting apparatus. Like structural elements of the first and third embodiments are denoted by like reference numerals, and repeated description thereof is omitted. For the effect which the third embodiment yields through employment of structural elements similar to those of the first embodiment, the effect which the first embodiment yields is applied accordingly.

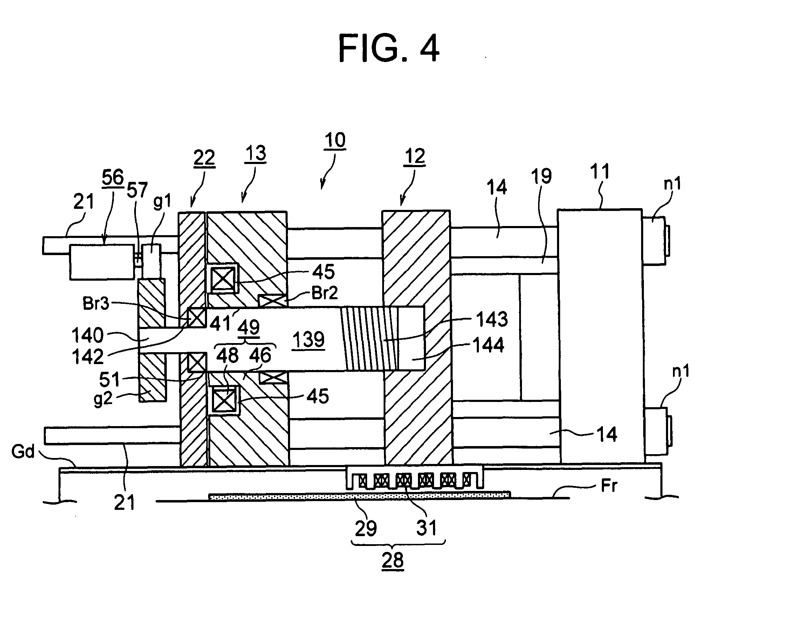

FIG. 4 is a view showing the third embodiment of the present invention in which the mold apparatus and the mold-clamping apparatus are in a mold-closed condition.

In this case, in a rod 139 which serves as a mold-clamping-force transmission member, a small-diameter portion 140 is formed at a rear end portion thereof, and thread 143 is formed at a front end portion thereof. The thread 143 is engaged with unillustrated thread formed on the inner circumferential surface of a hole 144 which is formed in the movable platen 12 serving as a first movable member and opens at the rear end surface of the movable platen 12, thereby connecting the rod 139 and the movable platen 12. A large-diameter gear g2 is attached to a rear end portion of the small-diameter portion 140, and the attraction plate 22 which serves as a second movable member is connected to a front end portion of the small diameter portion 140.

In order to implement the above configuration, the hole 41 is formed in a central portion of the rear platen 13 serving as a second stationary member, for allowing the rod 139 to extend therethrough; a hole 142 is formed in a central portion of the attraction plate 22 for allowing the small-diameter portion 140 to extend therethrough; a bearing member Br2, such as a bush, for slidably and rotatably supporting the rod 139 is disposed at a front end portion of the hole 41; and a bearing member Br3, such as a ball bearing, for rotatably supporting the rod 139 is disposed at a front end portion of the hole 142.

The mold-thickness-adjusting motor 56 which serves as a drive section for adjusting mold thickness is disposed on the attraction plate 22. The small-diameter gear g1 attached to the output shaft 57 of the mold-thickness-adjusting motor 56 is engaged with the gear g2.

When the mold-thickness-adjusting motor 56 is driven so as to rotate the rod 139 by a predetermined amount in relation to the movable platen 12 and in accordance with the thickness of the mold apparatus 19, the position of the rod 139 in relation to the movable platen 12 is adjusted. Thus, the position of the attraction plate 22 in relation to the stationary platen 11 and the movable platen 12 is adjusted accordingly, whereby the gap $\delta$ (FIG. 1) can be set to an optimum value.

The mold-thickness-adjusting motor 56, the gears g1 and g2, the rod 139, the movable platen 12, and the like constitute a mold-thickness-adjusting apparatus. The gears g1 and g2 constitute a rotation transmission section for transmitting rotation of the mold-thickness-adjusting motor 56 to the rod 139. The thread 143 and the thread of the hole 144 constitute a motion direction converter between the movable platen 12 and the rod 139. The motion direction converter converts the rotary motion of the rod 139 to the rectilinear motion of the rod 139. In this case, the thread 143 serves as a first conversion element, and the thread of the hole 144 serve as a second conversion element.

In the present embodiment, the mold-thickness-adjusting motor 56 is attached to the attraction plate 22, and the rod 139 is rotated by driving the mold-thickness-adjusting motor 56. However, the following alternative is possible: the mold-thickness-adjusting motor is attached to the movable platen 12, and the rod 139 is rotated by driving the mold-thickness-adjusting motor.

Next will be described a fourth embodiment of the present invention in which the mold-thickness-adjusting motor is attached to the rear platen 13. Like structural elements of the third and fourth embodiments are denoted by like reference numerals, and repeated description thereof is omitted. For the effect which the fourth embodiment yields through employment of structural elements similar to those of the third embodiment, the effect which the third embodiment yields is applied accordingly.

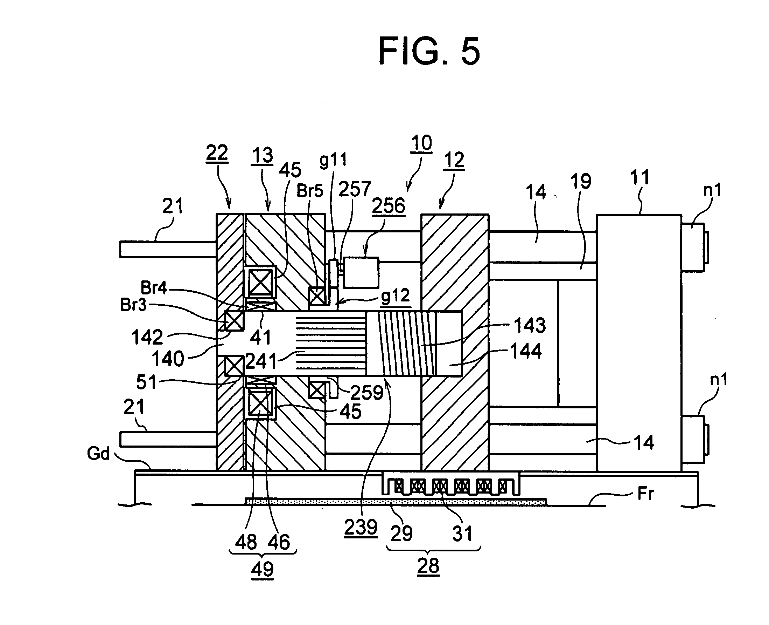

FIG. 5 is a view showing the fourth embodiment of the present invention in which the mold apparatus and the mold-clamping apparatus are in a mold-closed condition.

In this case, in a rod 239 which serves as a mold-clamping-force transmission member, the small-diameter portion 140 is formed at a rear end portion thereof; the thread 143 is formed at a front end portion thereof; and a spline 241 is formed at a central portion thereof. The rod 239 is connected, at a rear end portion, to the attraction plate 22 which serves as a second movable member; is spline-connected, at a central portion, to a large-diameter gear g12 via the spline 241; and is connected, at a front end portion, to the movable platen 12 which serves as a first movable member. The gear g12 includes a tubular portion 259. The tubular portion 259 functions as a spline nut and has an unillustrated spline on the inner circumferential surface thereof.

The hole 41 is formed in a central portion of the rear platen 13 serving as a second stationary member, for allowing the rod 239 to extend therethrough; the hole 142 is formed in a central portion of the attraction plate 22 for allowing the small-diameter portion 140 to extend therethrough; a bearing member Br5, such as a ball bearing, for rotatably supporting the gear g12 is disposed at a front end portion of the hole 41; a bearing member Br4, such as a bush, for slidably and rotatably supporting the rod 239 is disposed at a rear end portion of the hole 41; and the bearing member Br3, such as a ball bearing, for rotatably supporting the rod 239 is disposed at a front end portion of the hole 142. The thread 143 is engaged with unillustrated thread formed on the inner circumferential surface of the hole 144 which is formed in the movable platen 12 and opens at the rear end surface of the movable platen 12.

A mold-thickness-adjusting motor 256 which serves as a drive section for adjusting mold thickness is disposed on the rear platen 13. A small-diameter gear g11 attached to an output shaft 257 of the mold-thickness-adjusting motor 256 is engaged with the gear g12.

When the mold-thickness-adjusting motor 256 is driven so as to rotate the rod 239 by a predetermined amount in relation to the movable platen 12 and in accordance with the thickness of the mold apparatus 19, the position of the rod 239 in relation to the movable platen 12 is adjusted. Thus, the position of the attraction plate 22 in relation to the stationary platen 11 serving as a first stationary member and to the movable platen 12 is adjusted accordingly, whereby the gap δ (FIG. 1) can be set to an optimum value.

The mold-thickness-adjusting motor 256, the gears g11 and g12, the rod 239, the movable platen 12, and the like constitute a mold-thickness-adjusting apparatus. The gears g11 and g12 constitute a rotation transmission section for transmitting rotation of the mold-thickness-adjusting motor 256 to the rod 239. In the mold-thickness-adjusting apparatus, the thread 143 and the thread of the hole 144 constitute a motion direction converter between the movable platen 12 and the rod 239. The motion direction converter converts the rotary motion of the rod 239 to the rectilinear motion of the rod 239. In this case, the rod 239 serves as a first conversion element, and the movable platen 12 serves as a second conversion element.

Since the mold-thickness-adjusting motor 256 is attached to the rear platen 13, the mold-thickness-adjusting motor 256 does not move at the time of mold closing and mold opening. Accordingly, the attraction plate 22 can be smoothly advanced and retreated.

In the present embodiment, the mold-thickness-adjusting motor 256 is attached to the rear platen 13. However, the mold-thickness-adjusting motor may be attached to the movable platen 12.

Next will be described a fifth embodiment of the present invention in which a linear motor is disposed between the attraction plate 22 and the frame Fr. Like structural elements of the first and fifth embodiments are denoted by like reference numerals, and repeated description thereof is omitted. For the effect which the fifth embodiment yields through employment of structural elements similar to those of the first embodiment, the effect which the first embodiment yields is applied accordingly.

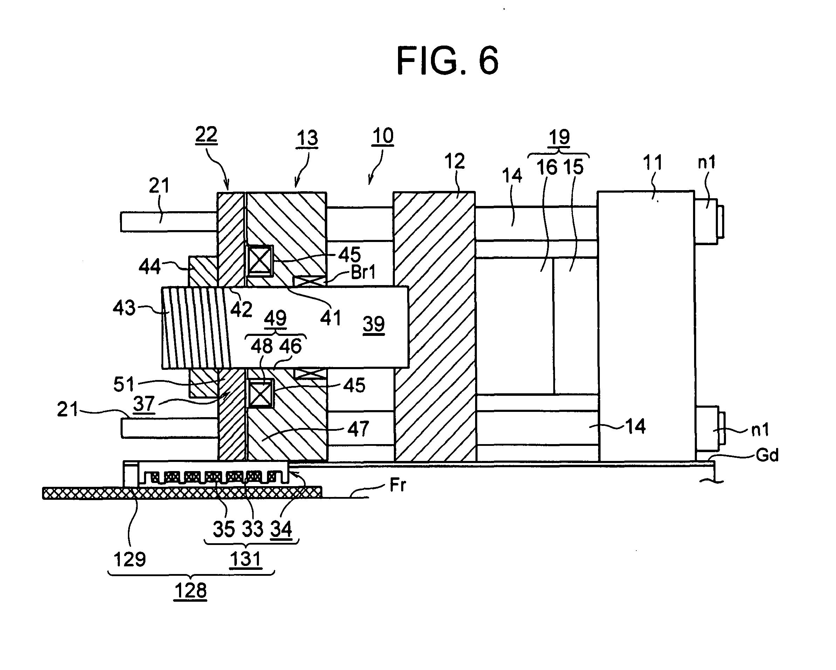

FIG. 6 is a view showing the fifth embodiment of the present invention in which the mold apparatus and the mold-clamping apparatus are in a mold-closed condition.

In this case, a linear motor 128 which serves as a first drive section and as a drive section for opening and closing a mold includes a stator 129 which serves as a first drive element, and a movable element 131 which serves as a second drive element. The stator 129 is disposed on the frame Fr in parallel with the guides Gd and in such a manner as to correspond to the moving range of the movable platen 12 which serves as a first movable member, and to the moving range of the attraction plate 22 which serves as the second movable member. The movable element 131 is disposed at the lower end of the attraction plate 22 in such a manner as to face the stator 129 and to extend over a predetermined range. When Lp1, Lm1, and Lst1 represent the length of the stator 129, the length of the movable element 131, and the stroke of the movable platen 12 and the attraction plate 22, respectively, the length Lm1 is set in accordance with the maximum thrust force of the linear motor 128, and the length Lp1 is set so as to satisfy:

$$Lp1 > Lm1 + Lst1$$

In order to secure the length Lm1, the movable element 131 is formed such that the front end thereof projects frontward by a predetermined amount from the front end surface of the attraction plate 22 and such that the rear end thereof projects rearward by a predetermined amount from the rear end surface of the attraction plate 22. The stator 129 is formed such that, when the movable platen 12, the attraction plate 22, and the movable mold 16 serving as a second mold are positioned at their respective advancement limit positions, the front end thereof projects slightly frontward from the front end of the core 34 and such that, when the movable platen 12, the attraction plate 22, and the movable mold 16 are positioned at their respective retreat limit positions, the rear end thereof slightly projects rearward from the rear end of the core 34.

The rod 39 which serves as a mold-clamping-force transmission member is disposed while extending through the attraction plate 22 and through the rear platen 13 serving as a second stationary member and while being connected, at a rear end portion, to the attraction plate 22 and being connected, at a front end portion, to the movable platen 12.

Accordingly, when, at the time of mold closing or mold opening, the linear motor 128 is driven by means of applying a predetermined current to the coil 35 of the linear motor 128, thrust force which serves as a first output is generated, whereby the movable element 131 is advanced or retreated. Accordingly, the thrust force is output to the attraction plate 22 as mold-opening-closing force. The mold-opening-closing force is transmitted to the movable platen 12 via the rod 39, whereby the movable platen 12 is advanced or retreated; i.e., mold closing or mold opening can be performed.

In order to perform mold clamping after completion of mold closing, the electromagnet unit 37 which serves as a second drive section and as a drive section for clamping a mold is disposed between the rear platen 13 and the attraction plate 22. At the time of mold clamping, when the electromagnet unit 37 is driven by means of applying predetermined current to the coil 48 of the electromagnet 49, thrust force which serves as a second output is generated on the attraction portion 51 which serves as a second drive member. The thrust force is output to the attraction plate 22 as mold-clamping force, and the mold-clamping force is transmitted to the movable platen 12. The stationary platen 11 which serves as a first stationary member, the movable platen 12, the rear platen 13, the tie bars 14 which serve as connection members, the guide posts 21 which serve as second guide members, the attraction plate 22, the linear motor 128, the electromagnet unit 37, the rod 39, and the like constitute the mold-clamping apparatus 10.

In this case, at the time of mold closing, thrust force generated by the linear motor 128 is transmitted to the attraction plate 22 and then to the movable platen 12 which is unitarily connected to the attraction plate 22 via the rod 39, thereby pressing the center of the movable platen 12. Thus, no inclination is formed on the movable platen 12. Therefore, when mold clamping is performed, the movable mold 16 can be pressed with uniform mold-clamping force.

Next will be described a sixth embodiment of the present invention in which a slide base is disposed between the attraction plate 22 and the linear motor 128. Like structural elements of the fifth and sixth embodiments are denoted by like reference numerals, and repeated description thereof is omitted. For the effect which the sixth embodiment yields through employment of structural elements similar to those of the fifth embodiment, the effect which the fifth embodiment yields is applied accordingly.

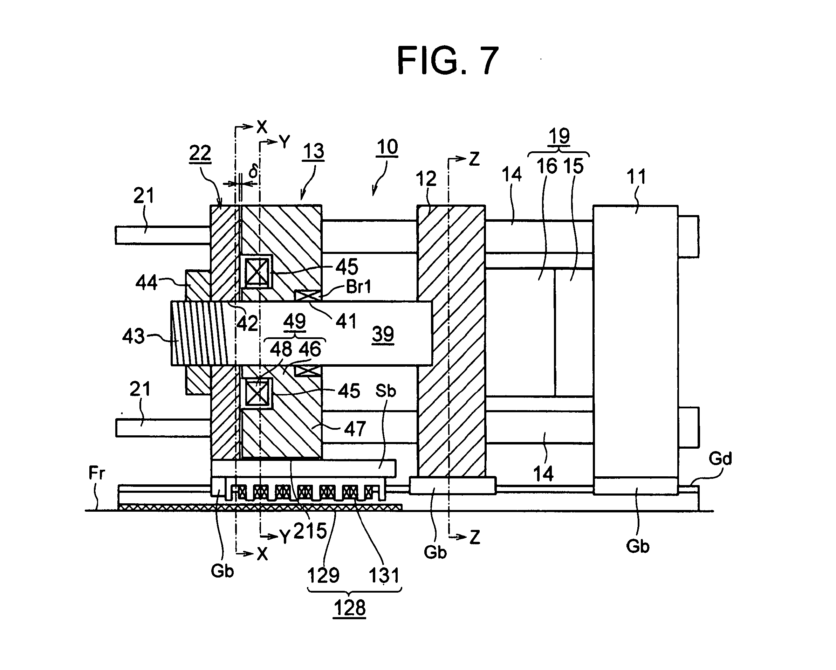

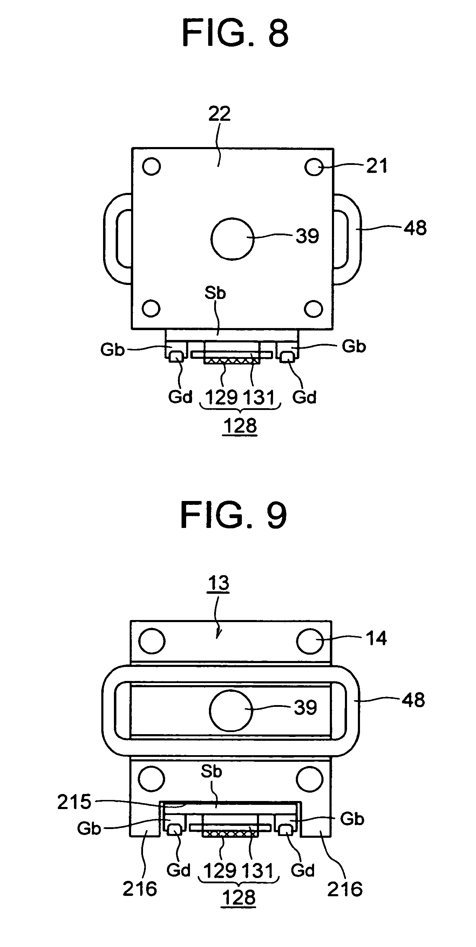

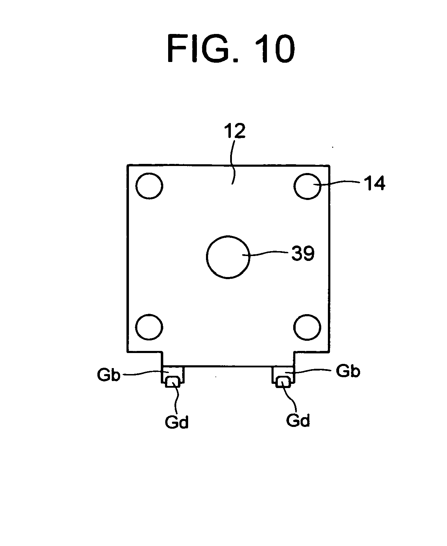

FIG. 7 is a view showing the sixth embodiment of the present invention in which the mold apparatus and the mold-clamping apparatus are in a mold-closed condition. FIG. 8 is a sectional view taken along line X-X of FIG. 7. FIG. 9 is a sectional view taken along line Y-Y of FIG. 7. FIG. 10 is a sectional view taken along line Z-Z of FIG. 7.

In this case, the stationary platen 11 which serves as a first stationary member, the movable platen 12 which serves as a first movable member, and the attraction plate 22 which serves as a second movable member are disposed on the guides Gd which serve as guide members, via guide blocks Gb which serve as members to be guided, whereas the rear platen 13 which serves as a second stationary member is fixed to the frame Fr. Accordingly in association with extension and contraction of the tie bars 14 which serve as connection members, the stationary platen 11 slightly moves in relation to the guides Gd.

The linear motor 128 which serves as a first drive section and as a drive section for opening and closing a mold is disposed between the attraction plate 22 and the frame Fr. The movable element 131 which serves as a second drive element is attached to the lower end of the attraction plate 22 via the slide base Sb which serves as a movable-member support. The slide base Sb extends frontward in the longitudinal direction while covering the upper surface of the movable element 131. Accordingly, a space 215 is formed at the lower end of the rear platen 13 in such a surrounding manner as to allow the linear motor 128, the guides Gd, the guide blocks Gb, the slide base Sb, and the like to extend therethrough. As a result, the rear platen 13 is fixed to the frame Fr via leg portions 216 located on the opposite sides of the space 215.

In this case, at the time of mold closing, thrust force generated by the linear motor 128 is transmitted to the slide base Sb and the attraction plate 22 and then to the movable platen 12 which is unitarily connected to the attraction plate 22 via the rod 39, thereby pressing the center of the movable platen 12. Thus, no inclination is formed on the movable platen 12. Therefore, when mold clamping is performed, the movable mold 16 can be pressed with uniform mold-clamping force.

The lower end of the attraction plate 22 and the rear end of the slide base Sb are joined together in a sufficiently firm condition, whereby the attraction plate 22 and the slide base Sb constitute a thrust-force transmission unit which has a shape resembling the letter "L" and functions as a rigid body. Accordingly, when, at the time of mold closing, thrust force generated by the linear motor 128 is transmitted to the attraction plate 22 via the slide base Sb and then to the rod 39, formation of inclination of the attraction plate 22 can be prevented. As a result, the thrust force can be smoothly transmitted to the movable platen 12 via the rod 39.

Next will be described a seventh embodiment of the present invention in which the slide base Sb is disposed between the movable platen 12 and the linear motor 128. Like structural elements of the sixth and seventh embodiments are denoted by like reference numerals, and repeated description thereof is omitted. For the effect which the seventh embodiment yields through employment of structural elements similar to those of the sixth embodiment, the effect which the sixth embodiment yields is applied accordingly.

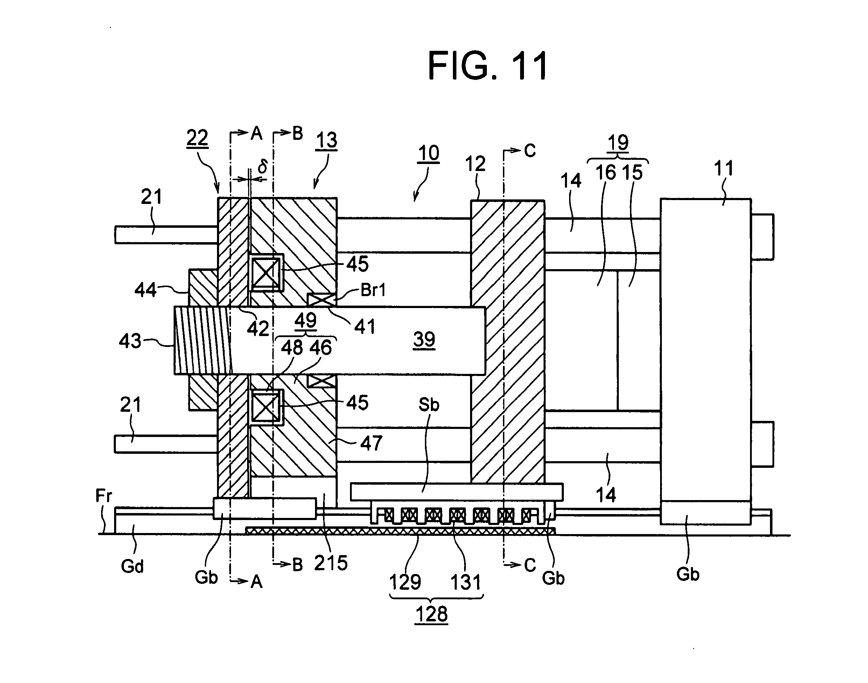

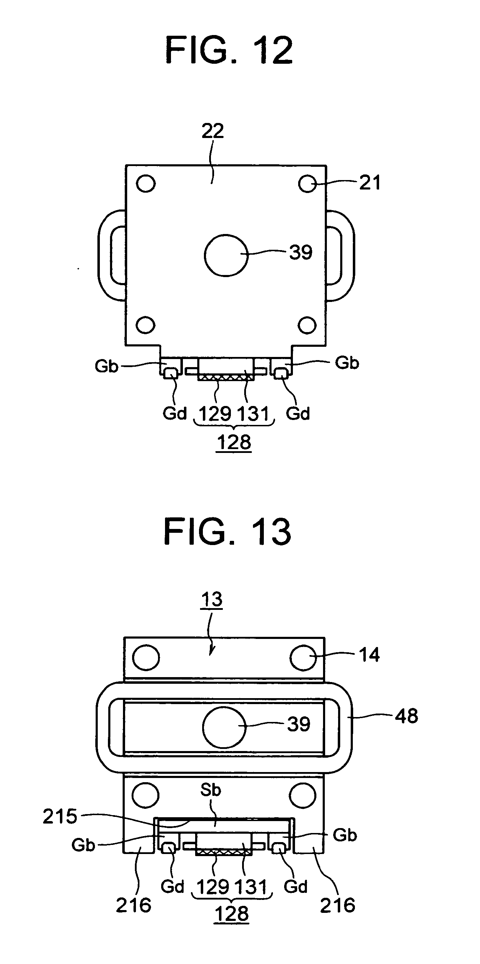

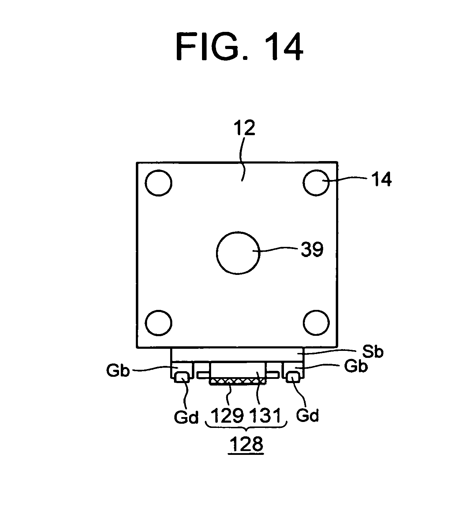

FIG. 11 is a view showing the seventh embodiment of the present invention in which the mold apparatus and the mold-clamping apparatus are in a mold-closed condition. FIG. 12 is a sectional view taken along line A-A of FIG. 11. FIG. 13 is a sectional view taken along line B-B of FIG. 11. FIG. 14 is a sectional view taken along line C-C of FIG. 11.

In this case, the stationary platen 11 which serves as a first stationary member, the movable platen 12 which serves as a first movable member, and the attraction plate 22 which serves as a second movable member are disposed on the guides Gd which serve as guide members, via guide blocks Gb which serve as members to be guided, whereas the rear platen 13 which serves as a second stationary member is fixed to the frame Fr. Accordingly in association with extension and contraction of the tie bars 14 which serve as connection members, the stationary platen 11 slightly moves in relation to the guides Gd.

The linear motor 128 which serves as a first drive section and as a drive section for opening and closing a mold is disposed between the movable platen 12 and the frame Fr. The movable element 131 which serves as a second drive element is attached to the lower end of the movable platen 12 via the slide base Sb which serves as a movable-member support. The slide base Sb extends rearward in the longitudinal direction while covering the upper surface of the movable element 131. Accordingly, the space 215 is formed at the lower end of the rear platen 13 in such a surrounding manner as to allow the linear motor 128, the guides Gd, the guide blocks Gb, the slide base Sb, and the like to extend therethrough. As a result, the rear platen 13 is fixed to the frame Fr via the leg portions 216 located on the opposite sides of the space 215.

The lower end of the movable platen 12 and the front end of the slide base Sb are joined together in a sufficiently firm condition, whereby the movable platen 12 and the slide base Sb constitute a thrust-force transmission unit which has a shape resembling the letter "L" and functions as a rigid body. Accordingly, when, at the time of mold closing, thrust force generated by the linear motor 128 is transmitted to the movable platen 12 via the slide base Sb, formation of inclination on the movable platen 12 can be prevented. As a result, at the time of mold clamping, the movable mold 16 can be pressed with uniform mold-clamping force.

Next will be described an eighth embodiment of the present invention in which the slide base is disposed between the movable platen 12 and the linear motor 128 and between the attraction plate 22 and the linear motor 128. Like structural elements of the sixth and eighth embodiments are denoted by like reference numerals, and repeated description thereof is omitted. For the effect which the eighth embodiment yields through employment of structural elements similar to those of the sixth embodiment, the effect which the sixth embodiment yields is applied accordingly.

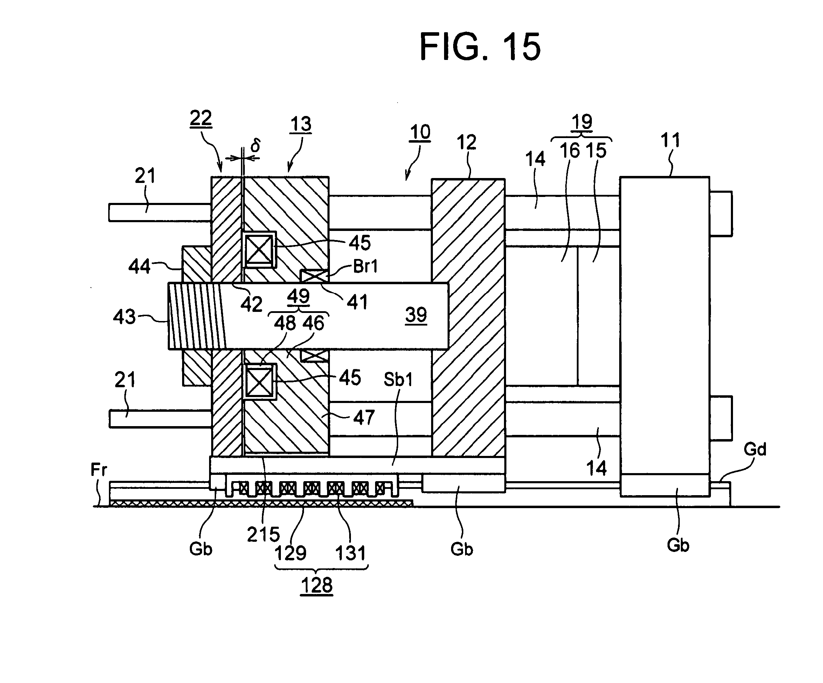

FIG. 15 is a view showing the eighth embodiment of the present invention in which the mold apparatus and the mold-clamping apparatus are in a mold-closed condition.

In this case, the stationary platen 11 which serves as a first stationary member, the movable platen 12 which serves as a first movable member, and the attraction plate 22 which serves as a second movable member are disposed on the guides Gd which serve as guide members, via guide blocks Gb which serve as members to be guided, whereas the rear platen 13 which serves as a second stationary member is fixed to the frame Fr. Accordingly in association with extension and contraction of the tie bars 14 which serve as connection members, the stationary platen 11 slightly moves in relation to the guides Gd.

The linear motor 128 which serves as a first drive section and as a drive section for opening and closing a mold is disposed between the movable platen 12 and the frame Fr and between the attraction plate 22 and the frame Fr. The movable element 131 which serves as a second drive element is attached via a slide base Sb1 which is provided between the lower end of the movable platen 12 and the lower end of the attraction plate 22 and serves as a movable-member support. The slide base Sb1 extends in the longitudinal direction between the movable platen 12 and the attraction plate 22 while covering the upper surface of the movable element 131. Accordingly, the space 215 is formed at the lower end of the rear platen 13 in such a surrounding manner as to allow the linear motor 128, the guides Gd, the guide blocks Gb, the slide base Sb1, and the like to extend therethrough. As a result, the rear platen 13 is fixed to the frame Fr via the leg portions 216 (FIG. 13) located on the opposite sides of the space 215.

The lower end of the movable platen 12 and the front end of the slide base Sb1 are joined together, and the lower end of the attraction plate 22 and the rear end of the slide base Sb1 are joined together, whereby the movable platen 12, the attraction plate 22, and the slide base Sb1 constitute a thrust-force transmission unit which functions as a rigid body. Accordingly, when, at the time of mold closing, thrust force generated by the linear motor 128 is transmitted to the attraction plate 22 and to the movable platen 12 via the slide base Sb1, formation of inclination on each of the attraction plate 22 and the movable platen 12 can be prevented. As a result, at the time of mold clamping, the movable mold 16 can be pressed with uniform mold-clamping force.

Since thrust force transmitted via the rod 39 presses the center of the movable platen 12, at the time of mold clamping, the movable mold 16 can be pressed with uniform mold-clamping force. Furthermore, at the time of mold closing, thrust force generated by the linear motor 128 is transmitted directly to the movable platen 12; thus, the positional accuracy of the movable platen 12 can be enhanced.

Either the lower end of the movable platen 12 and the front end of the slide base Sb1 or the lower end of the attraction plate 22 and the slide base Sb1 are detachably joined. At the time of mold closing, mold clamping, and mold opening, these joints remain joined. When mold thickness is to be adjusted, either one of the joints is detached so as to allow relative movement between the movable platen 12 and the attraction plate 22.

In the first to fifth embodiments, the stationary platen 11 is fixed to the frame Fr, whereas the rear platen 13 is disposed on the guides Gd and can be moved. In the sixth to eighth embodiments, the stationary platen 11 is disposed on the guides Gd and can be moved, whereas the rear platen 13 is fixed to the frame Fr. However, the following alternative is possible: either the stationary platen 11 or the rear platen 13 is fixed to the frame Fr, whereas the other one is disposed on the guides Gd and can be moved.

The present invention is not limited to the above-described embodiments. Numerous modifications and variations of the present invention are possible within the scope of the present invention as defined by the appended claims.

INDUSTRIAL APPLICABILITY

The present invention can be applied to a mold-clamping apparatus of an injection molding machine.

**Claims**

1. A mold-clamping apparatus (10) comprising:

(a) a first stationary member (11) to which a stationary mold (15) is attached;
(b) a first movable member (12) disposed in opposition to the first stationary member (11) and to which a movable mold (16) is attached; and
(c) a second movable member (22) to be advanced and retreated in association with advancement and retreat of the first movable member (12);
(d) a second stationary member (13) disposed between the first and second movable members (12, 22), the second stationary member (13) being disposed in opposition to the first stationary member (11) with the first movable member (12) disposed therebetween;
(e) a mold-clamping-force transmission member (39, 139, 239) connecting the first and second movable members (12, 22); and
(f) a first drive section (28, 128) adapted for advancing and retreating the first and second movable members (12, 22) for opening and closing a mold (15, 16, 19);

wherein mold thickness is adjusted by means of changing relative positions of the first movable member (12) and the second movable member (22);
**characterized in that**:

said first drive section (28, 128) for opening and closing said mold (15, 16, 19) is disposed offset from an axis of said mold-clamping-force transmission member (39, 139, 239).

2. A mold-clamping apparatus according to claim 1, wherein a second drive section (56) for adjusting mold thickness is disposed on the second movable member (22).

3. A mold-clamping apparatus according to claim 1 or 2, wherein:

(a) the first movable member (12) and the second movable member (22) are connected by means of said mold-clamping-force transmission member (39, 139, 239); and
(b) mold thickness is adjusted via the mold-clamping-force transmission member (39, 139, 239).

4. A mold-clamping apparatus according to any one of claims 1 to 3, wherein the first drive section (28, 128) for opening and closing the mold (15, 16, 19) is a linear motor.

5. A mold-clamping apparatus according to claim 1, wherein a plurality of ejector devices (55) are disposed on a rear end surface of the first movable member (12) around the mold-clamping-force transmission member (39).

6. A mold-clamping apparatus according to claim 1, wherein a plurality of the mold-clamping-force transmission members (39) are disposed on the rear end surface of the first movable member (12) around an ejector device (55).

7. A mold-clamping apparatus according to claim 1, wherein a second drive section (256) for adjusting mold thickness is disposed on the first movable member (12).

8. A mold-clamping apparatus according to claim 1, wherein a second drive section (256) for adjusting mold thickness is disposed on the second stationary member (13).

9. A mold-clamping apparatus according to claim 4, wherein the first drive section (28, 128) for opening and closing the mold (15, 16, 19) is disposed between a frame (Fr) and at least one of the first movable member (12) and the second movable member (22).

10. A mold-clamping apparatus according to claim 9, wherein a thrust-force transmitting portion (Sb, Sb1) is disposed between the first drive section (128) for opening and closing the mold (15, 16, 19), and at least one of the first movable member (12) and the second movable member (22).

11. A method of adjusting mold thickness for a mold-clamping apparatus (10) comprising a first stationary member (11) to which a stationary mold (15) is attached, a first movable member (12) disposed in opposition to the first stationary member (11) and to which a movable mold (16) is attached, a second movable member (22) to be advanced and retreated in association with advancement and retreat of the first movable member (12), a second stationary member (13) disposed between the first and second movable members (12, 22), the second stationary member (13) being disposed in opposition to the first stationary member (11) with the first movable member (12) disposed therebetween; and a mold-clamping-force transmission member (39, 39, 239) connecting the first and second movable members (12, 22), wherein mold thickness is adjusted by means of changing relative positions of the first movable member and the second movable member; **characterized in that** the first and second movable members (12, 22) are advanced and retreated by means of a first drive section (28, 128) for opening and closing a mold (15, 16, 19), wherein said first drive section (28, 128) for opening and closing said mold (15, 16, 19) is disposed offset from an axis of said mold-clamping-force transmission member (39, 139, 239).

**Patentansprüche**

1. Formwerkzeugverriegelungs- bzw. Formschließvorrichtung (10), die Folgendes aufweist:

   (a) ein erstes stationäres Glied (11) an dem ein stationäres Formwerkzeug bzw. eine stationäre Form (15) angebracht ist;
   (b) ein erstes bewegbares Glied (12), das gegenüberliegend dem ersten stationären Glied (11) angeordnet ist, und an dem eine bewegbare Form (16) angebracht ist; und
   (c) ein zweites bewegbares Glied (22), das in Verbindung mit dem Vorschieben und Zurückziehen des ersten bewegbaren Glieds (12) vorgeschoben und zurückgezogen werden soll;
   (d) ein zweites stationäres Glied (13), das zwischen den ersten und zweiten bewegbaren Gliedern (12, 22) angeordnet ist, wobei das zweite stationäre Glied (13) gegenüberliegend dem ersten stationären Glied (11) angeordnet ist, wobei das erste bewegbare Glied (12) zwischen diesen angeordnet ist;
   (e) ein Formklemm- bzw. Formschließkraftübertragungsglied (39, 139, 239), das die ersten und zweiten bewegbaren Glieder (12, 22) verbindet; und
   (f) einen ersten Antriebsabschnitt (28, 128), der angepasst ist, um die ersten und zweiten bewegbaren Glieder (12, 22) vorzuschieben und zurückzuziehen, um eine Form (15, 16, 19) zu öffnen und zu schließen;

   wobei die Formdicke mittels Verändern der Positionen des ersten bewegbaren Glieds (12) und des zweiten bewegbaren Glieds (22) angepasst wird; **dadurch gekennzeichnet, dass** der erste Antriebsabschnitt (28, 128) zum Öffnen und Schließen der Form (15, 16, 19) versetzt von einer Achse des Formschließkraftübertragungsglieds (39, 139, 239) angeordnet ist.

2. Formschließvorrichtung gemäß Anspruch 1, wobei ein zweiter Antriebsabschnitt (56) zum Anpassen der Formdicke auf dem zweiten bewegbaren Glied (22) angeordnet ist.

3. Formschließvorrichtung gemäß Anspruch 1 oder 2, wobei:

   (a) das erste bewegbare Glied (12) und das zweite bewegbare Glied (22) mittels dem Formschließkraftübertragungsglied (39, 139, 239) verbunden sind; und
   (b) die Formdicke über das Formschließkraftübertragungsglied (39, 139, 239) angepasst wird.

4. Formschließvorrichtung gemäß einem der Ansprüche 1 bis 3, wobei der erste Antriebsabschnitt (28, 128) zum Öffnen und Schließen der Form (15, 16, 19) ein Linearmotor ist.

5. Formschließvorrichtung gemäß Anspruch 1, wobei eine Vielzahl von Auswerfervorrichtungen (55) auf einer hinteren Endoberfläche des ersten bewegbaren Glieds (12) um das Formschließkraftübertragungsglied (39) herum angeordnet ist.

6. Formschließvorrichtung gemäß Anspruch 1, wobei eine Vielzahl von Formschließkraftübertragungsgliedern (39) auf der hinteren Endoberfläche des ersten bewegbaren Glieds (12) um eine Auswerfervorrichtung (55) herum angeordnet ist.

7. Formschließvorrichtung gemäß Anspruch 1, wobei ein zweiter Antriebsabschnitt (256) zum Anpassen der Formdicke auf dem ersten bewegbaren Glied (12) angeordnet ist.

8. Formschließvorrichtung gemäß Anspruch 1, wobei ein zweiter Antriebsabschnitt (256) zum Anpassen der Formdicke auf dem zweiten stationären Glied (13) angeordnet ist.

9. Formschließvorrichtung gemäß Anspruch 4, wobei der erste Antriebsabschnitt (28, 128) zum Öffnen und Schließen der Form (15, 16, 19) zwischen einem Rahmen (Fr) und dem ersten bewegbaren Glied (12) und/oder dem zweiten bewegbaren Glied (22) angeordnet ist.

10. Formschließvorrichtung gemäß Anspruch 9, wobei ein Beschleunigerkraft-übertragungsteil (Sb, Sb1) zwischen dem ersten Antriebsabschnitt (128) zum Öffnen und Schließen der Form (15, 16, 19) und dem ersten bewegbaren Glied (12) und/oder dem zweiten bewegbaren Glied (22) angeordnet ist.

11. Verfahren zum Anpassen der Formdicke für eine Formschließvorrichtung (10), die ein erstes stationäres Glied (11), an dem eine stationäre Form (15) angebracht ist, ein erstes bewegbares Glied (12), das gegenüberliegend dem ersten stationären Glied (11) angeordnet ist und an dem eine bewegbare Form (16) angebracht ist, ein zweites bewegbares Glied (22) zum Vorschieben und Zurückziehen in Verbindung mit dem Vorschieben und Zurückziehen des ersten bewegbaren Glieds, ein zweites stationäres Glied (13), das zwischen den ersten und zweiten bewegbaren Gliedern (12, 22) angeordnet ist, wobei das zweite stationäre Glied (13) gegenüberliegend dem ersten stationären Glied (11) angeordnet ist, wobei das erste bewegbare Glied (12) zwischen diesen angeordnet ist; und ein Formschließkraftübertragungsglied (39, 139, 239) umfasst, das die ersten und zweiten bewegbaren Glieder (12, 22) verbindet, wobei die Formdikke mittels Veränderung der relativen Positionen des ersten bewegbaren Glieds und des zweiten bewegbaren Glieds angepasst wird; **dadurch gekennzeichnet, dass** die ersten und zweiten bewegbaren Glieder (12, 22) mittels einem ersten Antriebsabschnitt (28, 128) vorgeschoben und zurückgezogen werden, um eine Form (15, 16, 19) zu öffnen und zu schließen, wobei der erste Antriebsabschnitt (28, 128) zum Öffnen und Schließen der Form (15, 16, 19) versetzt von einer Achse des Formschließkraftübertragungsglieds (39, 139, 239) angeordnet ist.

## Revendications

1. Dispositif de serrage de moule (10) comprenant :

(a) un premier élément fixe (11) auquel un moule fixe (15) est fixé ;
(b) un premier élément mobile (12) disposé en opposition au premier élément fixe (11) et auquel un moule mobile (16) est fixé ; et
(c) un deuxième élément mobile (22) pouvant être avancé et reculé en association avec l'avance et le recul du premier élément mobile (12) ;
(d) un deuxième élément fixe (13) disposé entre les premier et deuxième éléments mobiles (12, 22), le deuxième élément fixe (13) étant disposé en opposition au premier élément fixe (11) avec le premier élément mobile (12) disposé entre eux ;
(e) un élément de transmission de force de serrage de moule (39, 139, 239) connectant les premier et deuxième éléments mobiles (12, 22) ; et
(f) une première section d'entraînement (28, 128) adaptée à avancer et reculer les premier et deuxième éléments mobiles (12, 22) pour ouvrir et fermer un moule (15, 16, 19) ;

dans lequel l'épaisseur du moule est ajustée au moyen d'un changement des positions relatives du premier élément mobile (12) et du deuxième élément mobile (22) ;
**caractérisé en ce que** :

la première section d'entraînement (28, 128) destinée à ouvrir et fermer le moule (15, 16, 19) est disposée décalée par rapport à un axe de l'élément de transmission de force de serrage de moule (39, 139, 239).

2. Dispositif de serrage de moule selon la revendication 1, dans lequel une deuxième section d'entraînement (56) destinée à ajuster l'épaisseur du moule est disposée sur le deuxième élément mobile (22).

3. Dispositif de serrage de moule selon la revendication 1 ou 2, dans lequel :

   (a) le premier élément mobile (12) et le deuxième élément mobile (22) sont connectés au moyen de l'élément de transmission de force de serrage de moule (39, 139, 239) ; et
   (b) l'épaisseur du moule est ajustée par l'intermédiaire de l'élément de transmission de force de serrage de moule (39, 139, 239).

4. Dispositif de serrage de moule selon l'une quelconque des revendications 1 à 3, dans lequel la première section d'entraînement (28, 128) destinée à ouvrir et fermer le moule (15, 16, 19) est un moteur linéaire.

5. Dispositif de serrage de moule selon la revendication 1, dans lequel plusieurs dispositifs éjecteurs (55) sont disposés sur une surface d'extrémité arrière du premier élément mobile (12) autour de l'élément de transmission de force de serrage de moule (39).

6. Dispositif de serrage de moule selon la revendication 1, dans lequel plusieurs éléments de transmission de force de serrage de moule (39) sont disposés sur la surface d'extrémité arrière du premier élément mobile (12) autour d'un dispositif éjecteur (55).

7. Dispositif de serrage de moule selon la revendication 1, dans lequel une deuxième section d'entraînement (256) destinée à ajuster l'épaisseur du moule est disposée sur le premier élément mobile (12).

8. Dispositif de serrage de moule selon la revendication 1, dans lequel une deuxième section d'entraînement (256) destinée à ajuster l'épaisseur du moule est disposée sur le deuxième élément fixe (13).

9. Dispositif de serrage de moule selon la revendication 4, dans lequel la première section d'entraînement (28, 128) destinée à ouvrir et fermer le moule (15, 16, 19) est disposée entre un châssis (Fr) et au moins l'un du premier élément mobile (12) et du deuxième élément mobile (22).

10. Dispositif de serrage de moule selon la revendication 9, dans lequel une portion de transmission de force de poussée (Sb, Sb1) est disposée entre la première section d'entraînement (128) destinée à ouvrir et fermer le moule (15, 16, 19), et au moins l'un du premier élément mobile (12) et du deuxième élément mobile (22).

11. Procédé pour ajuster l'épaisseur d'un moule pour un dispositif de serrage de moule (10) comprenant un premier élément fixe (11) auquel un moule fixe (15) est fixé, un premier élément mobile (12) disposé en opposition au premier élément fixe (11) et auquel un moule mobile (16) est fixé, un deuxième élément mobile (22) pouvant être avancé et reculé en association avec l'avance et le recul du premier élément mobile (12), un deuxième élément fixe (13) disposé entre les premier et deuxième éléments mobiles (12, 22), le deuxième élément fixe (13) étant disposé en opposition au premier élément fixe (11) avec le premier élément mobile (12) disposé entre eux ; et un élément de transmission de force de serrage de moule (39, 139, 239) connectant les premier et deuxième éléments mobiles (12, 22),
dans lequel l'épaisseur du moule est ajustée au moyen d'un changement des positions relatives du premier élément mobile et du deuxième élément mobile ;
**caractérisé en ce que**
les premier et deuxième éléments mobiles (12, 22) sont avancés et reculés au moyen d'une première section d'entraînement (28, 128) destinée à ouvrir et fermer un moule (15, 16, 19), la première section d'entraînement (28, 128) destinée à ouvrir et fermer le moule (15, 16, 19) étant disposée décalée par rapport à un axe de l'élément de transmission de force de serrage de moule (39, 139, 239).

# FIG. 1

EP 1 726 426 B1

# FIG. 2

EP 1 726 426 B1

# FIG. 3

EP 1 726 426 B1

# FIG. 4

EP 1 726 426 B1

# FIG. 5

EP 1 726 426 B1

# FIG. 6

EP 1 726 426 B1

# FIG. 7

EP 1 726 426 B1

EP 1 726 426 B1

FIG. 8

22

21

39

48

Sb

Gb                    Gb

Gd  129 131  Gd

128

FIG. 9

13

14

48

39

Sb

215

Gb                    Gb

216

Gd  129 131  Gd  216

128

23

# FIG. 10

# FIG. 11

EP 1 726 426 B1

# FIG. 12

# FIG. 13

# FIG. 14

# FIG. 15

EP 1 726 426 B1

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 3190600 A
- DE 3715161 A1
- JP 10151649 A
- DE 10145740 A1